**Europäisches Patentamt**

**European Patent Office**

**Office européen des brevets**

(19)

(11) Numéro de publication: **0 083 899**
**B1**

(12) # FASCICULE DE BREVET EUROPÉEN

(45) Date de publication du fascicule du brevet:
**15.01.86**

(51) Int. Cl.⁴: **E 21 C 11/00**, G 05 B 19/18

(21) Numéro de dépôt: **82420183.4**

(22) Date de dépôt: **30.12.82**

(54) **Dispositif d'asservissement électro-hydraulique de bras-support articulé pour glissière d'appareil de foration.**

(30) Priorité: **11.01.82 FR 8200648**

(43) Date de publication de la demande:
**20.07.83 Bulletin 83/29**

(45) Mention de la délivrance du brevet:
**15.01.86 Bulletin 86/3**

(84) Etats contractants désignés:
**AT BE CH DE GB IT LI LU NL SE**

(56) Documents cité:
**FR-A-2 452 587**
**US-A-4 113 033**
**US-A-4 230 189**

(73) Titulaire: **ETABLISSEMENTS MONTABERT, 203, route de Grenoble, F-69800 Saint- Priest Rhône (FR)**

(72) Inventeur: **Montabert, Roger, 57 avenue des Frères Lumière, Lyon 8ème Rhône (FR)**

(74) Mandataire: **Maureau, Pierre, Cabinet GERMAIN & MAUREAU Le Britannia - Tour C 20, Boulevard E. Déruelle, F-69003 Lyon (FR)**

EP 0 083 899 B1

## Description

La présente invention se rapporte à un dispositif d'asservissement électro-hydraulique de bras-support articulé pour glissière d'appareil de foration; elle concerne le domaine des appareils de foration utilisés pour l'avancement des galeries de mines, pour le creusement des tunnels et, plus généralement, pour tous travaux souterrains.

Ce dispositif d'asservissement électro-hydraulique est plus particulièrement applicable à un bras-support qui est à la fois orientable en toutes directions, pour pouvoir se prêter à divers travaux miniers, et propre à maintenir la glissière parallèle à elle-même, ce brassupport comprenant : un pivot de base monté tournant autour d'un axe sensiblement vertical, un premier moyen moteur hydraulique apte à commander la rotation du pivot de base autour de l'axe précité, un bras articulé au pivot de base autour d'un axe sensiblement horizontal, un deuxième moyen moteur hydraulique apte à commander le pivotement du bras autour de son axe d'articulation au pivot de base, un bloc-support intermédiaire situé à l'extrémité libre du bras et monté tournant autour de l'axe longitudinal dudit bras, un troisième moyen moteur hydraulique apte à commander la rotation dudit blocsupport, un berceau supportant la glissière et articulé sur le bloc-support précité autour d'un axe orthogonal à l'axe longitudinal du bras, un quatrième moyen moteur hydraulique apte à commander le mouvement du berceau autour de son axe d'articulation, et des moyens électroniques de calcul qui, à partir de deux premiers paramètres de position repérés par des capteurs et résultant des mouvements commandés par les deux premiers moyens moteurs hydrauliques, déterminent en continu les deux autres paramètres de position repérés par des capteurs correspondant aux mouvements commandés par les deux derniers moyens moteurs hydrauliques, de manière à ce que la glissière reste parallèle à elle-même, suivant le brevet français N° 2 452 587.

Un bras-support articulé de ce type comporte avantageusement, en plus de ses quatre mouvements de base commandés par des vérins ou moteurs hydrauliques et définis par des grandeurs angulaires, un cinquième mouvement résultant de ce que le bras articulé au pivot de base est extensible, grâce à une structure télescopique et à un vérin hydraulique supplémentaire, ce mouvement supplémentaire n'ayant pas d'incidence sur l'orientation de la glissière. Un tel bras extensible peut être composé d'un bras proprement dit et d'un avant-bras monté tournant dans le prolongement du bras proprement dit, l'avant-bras étant lui-même formé par deux éléments montés coulissants l'un dans l'autre, le bloc-support étant solidaire de l'un de ces éléments, suivant l'une des formes de réalisation décrites par le brevet français N° 2 452 587 déjà cité plus haut.

Les systèmes connus de commande et de contrôle des mouvements de ce genre de bras-support comportent encore divers inconvénients ou insuffisances :

— L'automatisme est limité au maintien de la glissière parallèle à elle-même ; ainsi, les deux premiers mouvements du bras-support restent commandés manuellement par l'opérateur, et l'asservissement détermine seulement le fonctionnement automatique des deux derniers mouvements du bras-support.

— Dans un tel bras, les charges, les efforts et leurs positions sont essentiellement variables. Ils peuvent être, pour chaque mouvement, soit résistants, soit moteurs. Actuellement, ce problème de charges et d'efforts est résolu par l'emploi de systèmes correcteurs hydrauliques, fonctionnant comme des régulateurs de débit ou des « balances hydrauliques ». Les réglages de ces systèmes hydrauliques étant figés, il est difficile d'obtenir de bonnes performances de ceux-ci sur tout le déplacement d'un bras-support.

— Le mouvement de rotation sur 360° du bloc-support intermédiaire, dans la structure de bras rappelée cidessus, pose le problème de trouver un capteur linéaire sur 360° pour l'asservissement de ce mouvement.

— Un bras-support de genre ici considéré doit aussi pouvoir être commandé manuellement, tous ses mouvements devenant alors indépendants pour permettre d'amener la glissière en toutes positions et orientations désirées. Cette fonction de passage du fonctionnement « automatique » au fonctionnement « manuel » est, dans les systèmes connus, réalisée très imparfaitement, ou bien par un distributeur auxiliaire déconnectant l'automatisme et par conséquent n'utilisant plus les systèmes correcteurs, ou par une commande potentiométrique ayant l'inconvénient de ne permettre ni l'arrêt du bras-support dans une position désirée, ni un contrôle de la vitesse.

On connaît par ailleurs, par le brevet US A 4 113 033, un certain appareil de foration équipé d'un système permettant le forage automatique d'une série de trous suivant un programme ou « plan de tir » prédéterminé, au moyen d'un asservissement électro-hydraulique utilisant un calculateur de traitement de données, et permettant d'amener le bras-support articulé de la glissière dans des positions et orientations successives prédéterminées.

Dans la réalisation selon ce document, le calculateur ne peut fonctionner sans l'intervention d'une multitude de circuits auxiliaires analogiques : oscillateurs, additionneurs, multiplicateurs, convertisseurs, amplificateurs magnétiques, correcteurs, etc . . . nécessaires aux calculs de coordonnées.

Malgré cette complexité, le système du brevet US A 4 113 033 a des possibilités limitées. En particulier, il est prévu pour réaliser un seul plan de tir, correspondant aux données programmées à l'avance, et ne permet pas une sélection entre plusieurs plans de tir. De plus, même si théoriquement le système permet l'obtention de toutes positions et orientations du bras-support et de la glissière, il n'est pas du tout conçu pour le mode de fonctionnement privilégié, dans lequel la glissière est maintenue parallèle à elle-même.

D'autre part, le système du brevet US A 4 113 033 utilise des « correcteurs », au sens de dispositifs déterminant un écart, ou assurant des transformations de coordonnées, mais il ne comporte pas de correcteurs d'asservissement au sens propre prenant en compte des facteurs mécaniques, tels qu'efforts ou charges auxquels est soumis le bras-support. Il en résulte une inadaptation et une imprécision de l'asservissement, encore aggravées par le fait que les électrovalves, par l'intermédiaire desquelles sont commandés les mouvements du bras-support, sont situées à distance des vérins à alimenter, et sont reliées à ces derniers par des conduits hydrauliques d'une certaine longueur.

Enfin, le système selon le document considéré utilise des capteurs d'angles classiques du genre « selsyns », associés à des convertisseurs transformant les valeurs des sinus et cosinus en impulsions de commande, selon un mode non linéaire qui n'est pas compatible avec une rotation sur 360° et un asservissement en boucle fermée.

La présente invention fournit un dispositif d'asservissement électro-hydraulique s'appliquant à un bras-support de glissière ayant une structure mécanique selon le brevet français N° 2 452 587, pour permettre l'exécution d'un plan de tir prédéterminé, tout en évitant les inconvénients d'un système tel que celui du brevet US A 4 113 033, c'est-à-dire un dispositif d'asservissement qui :

— soit de structure simple, par la mise en oeuvre d'un calculateur autonome rendant inutiles tous circuits analogiques auxiliaires ;

— permette une sélection simple entre plusieurs plans de tir ;

— comporte des systèmes correcteurs adaptés et précis, pour un positionnement lui-même précis et stable du bras-support de la glissière, plus particulièrement dans un fonctionnement où la glissière doit rester parallèle à une direction donnée ;

— utilise, au moins pour le repérage de certains paramètres, des capteurs particuliers mieux adaptés à la structure mécanique du bras-support et à l'obtention d'un asservissement précis.

A cet effet, l'invention a pour objet un dispositif d'asservissement électro-hydraulique de bras articulé pour glissière d'appareil de foration, du genre rappelé plus haut, dans lequel un calculateur électronique, relié à un sélecteur de plans de tir, et enregistrant les signaux électriques issus des capteurs repérant les paramètres de position correspondant aux différents mouvements du bras-support, non seulement détermine les derniers paramètres en fonction des premiers, mais encore contrôle les déplacements et arrêts du bras-support amenant successivement la glissière dans un certain nombre de positions suivant le plan de tir sélectionné au moyen du sélecteur, ledit calculateur délivrant, pour les différents mouvements du bras-support, des signaux de commande électriques transitant par des circuits de commande respectifs sur lesquels sont intercalés des correcteurs électroniques d'asservissement — analogiques ou numériques — permettant de tenir compte des efforts ou charges auxquels est soumis le bras-support, selon leurs positions, les différents circuits de commande aboutissant à des organes électrohydrauliques, notamment du type « servo-distributeur », montés directement sur les moyens moteurs hydrauliques, vérins ou moteur rotatif, les correcteurs électroniques d'asservissement recevant également les signaux issus des capteurs dont l'un délivre, pour repérer le paramètre angulaire correspondant au mouvement de rotation sur 360° autour de l'axe longitudinal du bras, des signaux électriques proportionnels au sinus et au cosinus de l'angle de rotation, ces signaux étant amenés à des entrées du calculateur électronique qui restitue un signal variant linéairement en fonction de l'angle de rotation, ce dernier signal étant amené au correcteur électronique d'asservissement intercalé sur le circuit de commande du moteur de rotation.

Cet asservissement utilise ainsi des moyens électroniques évolués, notamment un microprocesseur permettant la programmation de séquences de fonctionnement automatiques, la machine se trouvant dans l'axe de la galerie ou non. Pour chaque mouvement, l'asservissement en boucle fermée utilise un correcteur électronique, dont la détermination peut être faite par une étude du comportement du système au travers d'une analyse harmonique, complétée par une modélisation du bras, le réglage optimum des correcteurs étant ensuite obtenu par réponse du système à un échelon. Dans le cas d'un bras-support dont les positions sont définies par quatre paramètres angulaires, dont les deux derniers se déduisent des deux premiers, le microprocesseur permet la programmation des deux angles définis par les deux premiers paramètres, et correspondant à deux mouvements commandés à travers les correcteurs. Une matrice de trous à forer, aux positions définies par ces deux premiers paramètres, est programmée en tenant compte des chemins les plus courts d'un point à un autre ; le microprocesseur calcule les deux autres paramètres angulaires, en tenant compte, s'il y a lieu, du mouvement de télescopage qui, dans ce calcul, intervient comme une simple translation d'axe. L'opérateur peut disposer au choix de l'un ou l'autre des plans de tir par simple commutation sur un pupitre. Le calculateur permet aussi d'employer, pour repérer l'un des paramètres, un capteur particulier délivrant des signaux proportionnels au sinus et au cosinus de l'angle de rotation autour de l'axe longitudinal du bras.

Pour les autres mouvements, d'amplitude plus petite, l'on peut utiliser des capteurs connus qui fournissent des signaux proportionnels aux valeurs des angles correspondants, ces signaux étant dirigés directement vers les correcteurs électroniques respectifs. Par ailleurs, le montage direct des « servo-distributeurs » sur les vérins ou autres moyens moteurs permet la suppression de nombreux conduits hydrauliques, tout en augmentant la précision de fonctionnement de l'asservissement.

Suivant une autre caractéristique de l'invention, il est prévu un commutateur électrique « manuel/ automatique », relié directement à une entrée du calculateur électronique, et un ensemble de manipulateurs électriques « tout ou rien » de commande manuelle indépendante des différents mouvements du bras-support, également reliés directement à des entrées du calculateur électronique. Le fonctionnement manuel est ainsi rendu possible sans organe hydraulique ou potentiométrique auxiliaire, en utilisant toujours le calculateur qui reçoit, simultanément, les signaux issus des différents capteurs, et en faisant toujours intervenir les correcteurs électroniques. Les mouvements du bras-support pourront être ainsi commandés manuellement avec une vitesse appropriée, et en obtenant l'arrêt de ce bras-support, donc de la glissière de foration, en toute position désirée.

De toute façon, l'invention sera mieux comprise à l'aide de la description qui suit, en référence au dessin schématique annexé représentant, à titre d'exemple non limitatif, une forme d'exécution de ce dispositif d'asservissement électro-hydraulique de bras-support articulé pour glissière d'appareil de foration :

Figure 1 est une vue en perspective d'un bras-support articulé, dont les mouvements sont asservis par le dispositif objet de la présente invention ;

Figure 2 est un schéma de principe de ce dispositif d'asservissement électro-hydraulique ;

Figure 3 est un diagramme illustrant la conversion d'une tension à variation sinusoïdale fournie par un capteur en une tension à variation linéaire, par le calculateur de ce dispositif d'asservissement.

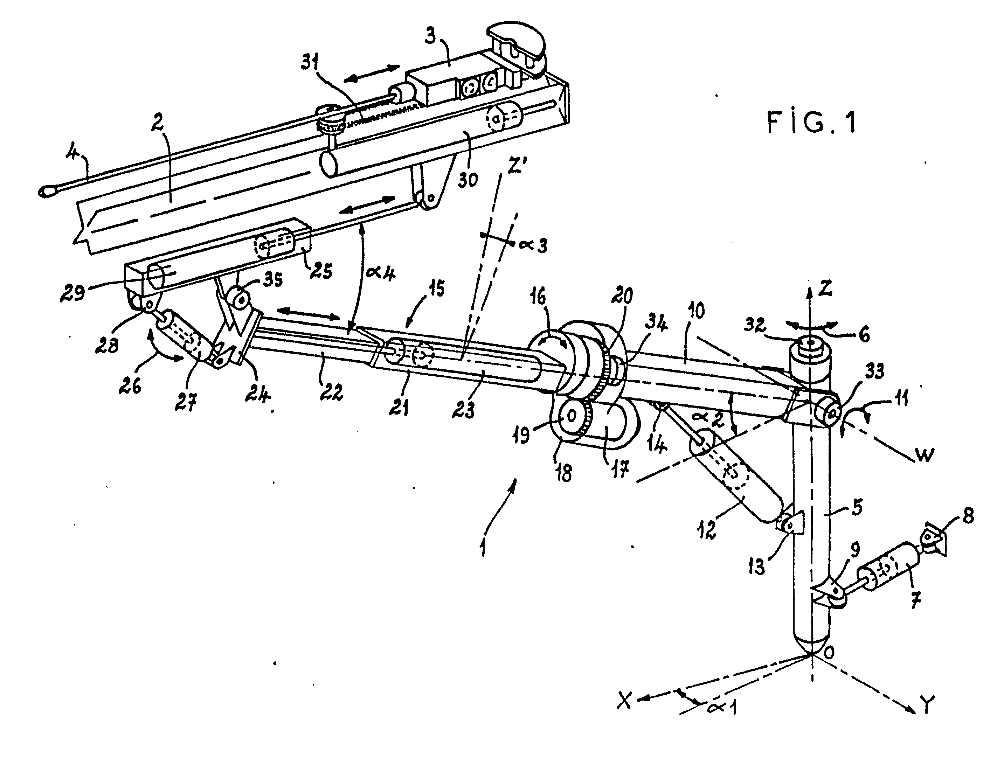

La figure 1 montre un bras-support articulé, désigné dans son ensemble par le repère 1, qui soutient une glissière de foration 2 le long de laquelle est déplaçable une perforatrice 3 dont le fleuret est indiqué en 4. Le bras-support 1 est monté au-dessus d'un châssis appartenant à un engin porteur, ce châssis n'étant pas représenté si ce n'est par les axes horizontaux OX et OY, perpendiculaires entre eux, qui définissent son plan. L'axe OX est supposé représenter une direction parallèle à l'axe de la galerie que l'on se propose de forer à l'aide de l'appareil. La glissière de foration 2 doit être positionnée parallèlement à l'axe OX, et maintenue suivant cette orientation, du moins dans le fonctionnement de base recherché.

Le bra-support 1 comprend une première partie 5 dite pivot de base, possédant un axe vertical OZ et pouvant tourner autour de cet axe OZ. La rotation du pivot de base 5 autour de son axe OZ, symbolisée par une flèche 6, est commandée par un vérin hydraulique 7 dit de pivotement, monté entre un point fixe 8 et une chape 9 faisant saillie sur le côté du pivot de base 5. L'angle de rotation du pivot de base 5 est désigné par $\alpha 1$, qui peut être défini comme étant l'angle formé entre l'axe OX et la projection de l'ensemble du bras sur le plan XOY.

A la partie supérieure du pivot de base 5 est articulé, autour d'un axe horizontal W, le bras proprement dit 10. Le pivotement de ce bras 10 autour de l'axe W, symbolisé par une flèche 11, est commandé par un vérin hydraulique 12 dit de levée, qui relié une chape 13 faisant saillie sur l'avant du pivot 5 à une autre chape 14 formée sous le bras 10. L'angle de rotation du bras 10 est désigné par $\alpha 2$, qui peut être défini comme étant l'angle formé par l'axe longitudinal de ce bras 10, par rapport à un plan horizontal.

Dans le prolongement du bras 10 est monté un avant-bras 15, cet avant-bras pouvant décrire un mouvement de rotation autour de l'axe longitudinal du bras 10, comme le symbolise une flèche 16. Ce mouvement de rotation s'effectuant sur 360° est commandé par un moteur hydraulique 17, logé dans un boîtier 18 solidaire du bras 10, et accouplé à l'avant-bras 15 par l'intermédiaire de pignons 19, 20. L'angle de rotation de l'avant-bras 15 est désigné par $\alpha 3$, qui peut être défini en prenant comme origine un axe Z' perpendiculaire au bras 10 et contenu dans le plan vertical passant par ce bras.

L'avant-bras 15 est lui-même formé par deux éléments 21 et 22, montés coulissants l'un dans l'autre de manière à réaliser une structure télescopique, la longueur de cet ensemble étant modifiable au moyen d'un vérin hydraulique de télescopage 23.

A son extrémité extérieure, l'élément 22 de l'avantbras 15 porte un bloc-support intermédiaire 24, sur lequel est articulé, suivant un axe orthogonal à l'axe longitudinal de l'avant-bras 15, un berceau 25 qui supporte la glissière de foration 2. Le pivotement du berceau 25 autour de son axe d'articulation, mouvement symbolisé par une flèche 26, est commandé par un vérin 27 dit de basculement ou d'inclinaison qui relie le bloc-support 24 à une chape 28 prévue sous le berceau 25. L'angle de rotation de ce berceau 25, donc de la glissière de foration 2, autour de son axe de liaison avec le bloc-support 24, est désigné par $\alpha 4$, qui peut être défini comme l'angle formé entre la direction de l'avant-bras 15 et la direction de la glissière 2 ou du berceau 25.

La glissière de foration 2 est liée au berceau 25 par l'intermédiaire d'un vérin 29 dit vérin d'ancrage, permettant de commander l'avance ou le recul de la glissière 2. Celle-ci porte un dernier vérin 30 qui, par l'intermédiaire d'une chaîne mouflée 31, commande le déplacement de la perforatrice 3 le long de la glissière 2, pour faire avancer ou reculer le fleuret 4 par rapport au front de foration, situé dans un plan parallèle au plan YOZ.

Toute position de la glossière 2 correspond à des valeurs déterminées des quatre angles $\alpha 1$, $\alpha 2$, $\alpha 3$ et $\alpha 4$, qui sont repérées par des capateurs, respectivement 32, 33, 34 et 35 (le mouvement de télescopage n'étant pas concerné par le dispositif d'asservissement ici décrit). Si l'on impose à la glissière de foration 2 de rester parallèle à l'axe OX, les quatre angles en question sont liés entre eux par les relations suivantes :

$$\cos \alpha 4 = \cos \alpha 1 \cdot \cos \alpha 2 \qquad (I)$$

$$\operatorname{tg} \alpha 3 = \frac{-\operatorname{tg}\alpha 1}{\sin\alpha 2} \qquad (II)$$

$$\sin\alpha3 \ = \ \frac{\sin\alpha1}{\sin\alpha4} \qquad\qquad (III)$$

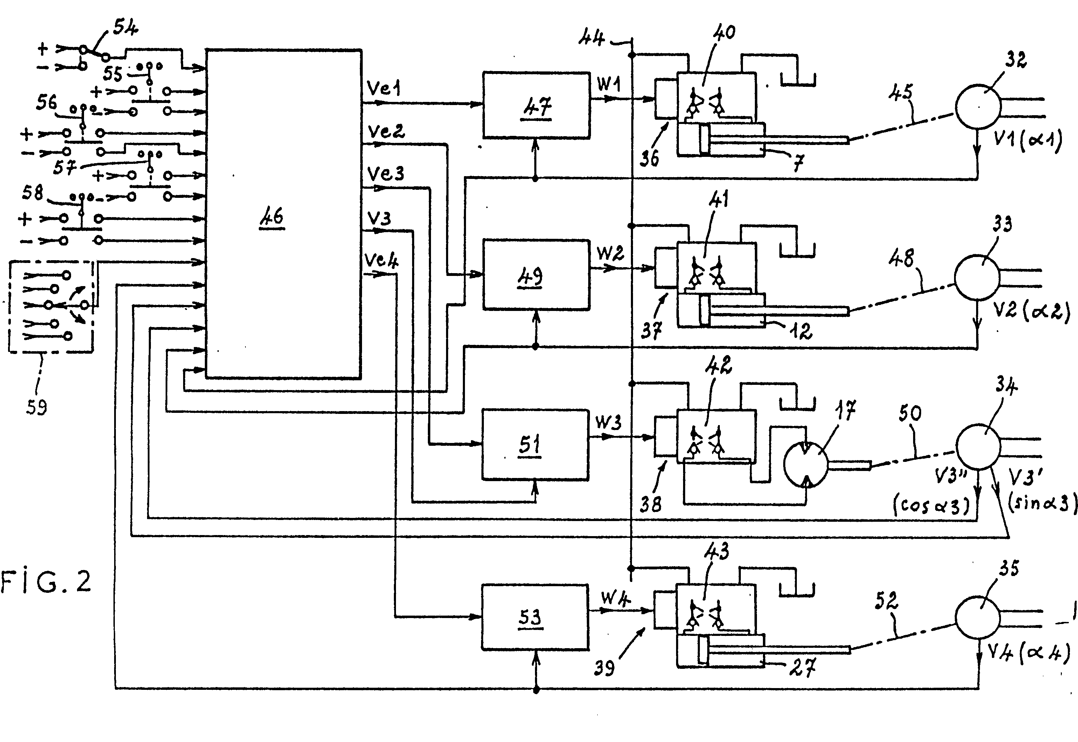

faisant intervenir les fonctions trigonométriques de base de ces angles $\alpha1$, $\alpha2$, $\alpha3$ et $\alpha4$. Si les valeurs des deux angles $\alpha1$ et $\alpha2$ sont connues, il est possible d'en déduire celles des deux autres angles $\alpha3$ et $\alpha4$, en utilisant par exemple les relations (I) et (II). Ce procédé est mis en oeuvre par l'asservissement électro-hydraulique représenté, sous forme de schéma de principe sur la figure 2.

Sur cette figure sont de nouveau indiqués les vérins et moteur hydrauliques 7, 12, 17 et 27, sur lesquels sont directement montées des servo-valves de commande, respectivement 36, 37, 38 et 39, associées à des blocs de régulation avec clapets antiretour, respectivement 40, 41, 42 et 43. 44 désigne la conduite d'amenée de fluide hydraulique sous pression aux différents moyens moteurs.

Le premier capteur 32, placé par exemple au sommet du pivot de base 5, possède une liaison mécanique symbolisée en 45 avec l'organe déplacé par le vérin de pivotement 7. Il fournit une tension électrique V1, proportionnelle à la valeur de l'angle de pivotement $\alpha1$, pui est dirigée d'une part vers un calculateur électronique 46, d'autre part vers un correcteur électronique analogique 47 intercalé sur le circuit de commande du vérin de rotation 7.

Le second capteur 33, placé par exemple sur l'articulation du bras 10 au pivot de base 5, possède uni liaison mécanique symbolisée en 48 avec l'organe déplacé par le vérin de levée 12. Il fournit une tension électrique V2, proportionnelle à la valeur de l'angle de levée $\alpha2$, qui est dirigée d'une part vers le calculateur électronique 46, d'autre part vers un correcteur électronique analogique 49 intercalé sur le circuit de commande du vérin de levée 12.

Le troisième capteur 34, placé par exemple à l'extrémité antérieure du bras 10, possède une liaison mécanique symbolisée en 50 avec l'organe déplacé par le moteur de rotation 17. Il fournit deux tensions électriques V3' et V3", proportionnelles respectivement au sinus et au cosinus de l'angle de rotation $\alpha3$, qui sont dirigées l'une et l'autre vers le calculateur 46. Ce dernier restitue une tension V3 variant linéairement, qui est amenée à un correcteur électronique analogique 51 intercalé sur le circuit de commande du moteur de rotation 17.

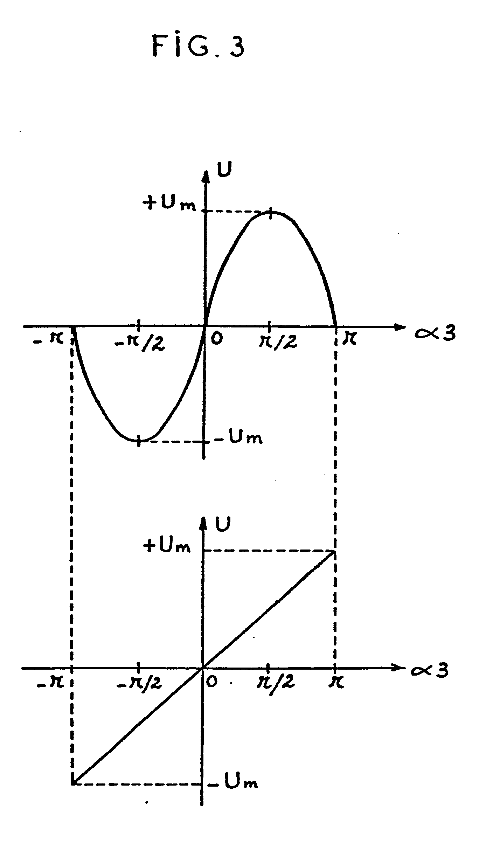

Le diagramme de la figure 3 illustre la conversion, effectuée par le calculateur électronique 46, d'une tension U à variation sinusoïdale, dont les valeurs maximale et minimale sont désignées respectivement par $+Um$ et $-Um$, en une tension à variation linéaire, ayant par exemple les mêmes valeurs maximale et minimale $+Um$ et $-Um$.

Le quatrième capteur 35, placé par exemple sur l'articulation du berceau 25 au bloc-support 24, possède une liaison mécanique symbolisée en 52 avec l'organe déplacé par le vérin de basculement ou d'inclinaison 27. Il fournit une tension électrique V4, proportionnelle à la valeur de l'angle de basculement ou d'inclinaison $\alpha4$, qui est dirigée d'une part vers le calculateur 46, d'autre part vers un correcteur électronique analogique 53 intercalé sur le circuit de commande du vérin de basculement ou d'inclinaison 27.

Aux entrées du calculateur 46 sont encore connectés :
— un commutateur électrique « manuel/ automatique » 54 ;
— quatre manipulateurs électriques « tout ou rien » de commande manuelle 55, 56, 57 et 58, correspondant aux mouvements actionnés respectivement par le vérin de pivotement 7, le vérin de levée 12, le moteur de rotation 17 et le vérin de basculement ou d'inclinaison 27 ; et
— un sélecteur de plans de tir 59.

En cours de fonctionnement automatique, le bras-support 1 est programmé à partir du sélecteur de plans de tir 59, de manière à amener la glissière 2 successivement dans un certain nombre de positions, définies chacune par les angles $\alpha1$ et $\alpha2$. Le calculateur 46 résoud les équations (I) et (II) indiquées plus haut pour déterminer les angles $\alpha3$ et $\alpha4$ à partir des angles $\alpha1$ et $\alpha2$. Ce calculateur 46 délivre ainsi, à ses sorties, quatre tensions électriques de consigne Ve1, Ve2, Ve3 et Ve4 qui représentent les angles respectifs $\alpha1$, $\alpha2$, $\alpha3$ et $\alpha4$ suivant lesquels la glissière 2 doit être placée. Les correcteurs analogiques 47, 49, 51 et 53 prennent en considération les tensions V1, V2, V3 et V4 délivrées par les capteurs et représentatives des valeurs instantanées des angles, et fournissent des signaux de commande, respectivement W1, W2, W3 et W4, qui sont amenés aux servo-valves 36, 37, 38 et 39.

Il est possible de définir ainsi des plans de tir pour la foration de trous parallèles divergents ou convergents, l'engin porteur du bras-support 1 étant dans l'axe de la galerie. Si l'engin est placé différemment, et si l'axe est matérialisé par un système optique, il suffit de positionner initialement la glissière 2 suivant cet axe, manuellement. Le calculateur 46 redéfinira alors les nouveaux angles $\alpha1$ et $\alpha2$ de manière à obtenir les relations donnant $\cos \alpha4$ et $tg \alpha3$, partant des valeurs connues des angles $\alpha3$ et $\alpha4$. Le plan de tir sera ainsi automatiquement ajusté, la glissière 2 restant parallèle à l'axe choisi.

Pour obtenir le fonctionnement manuel, l'opérateur après avoir placé le commutateur 54 dans la position correspondante commandera chaque mouvement au moyen du manipulateur correspondant 55, 56, 57 ou 58. La commande se fait par l'intermédiaire du calculateur 46, qui enregistre simultanément la tension V1, V2, V3 ou V4 délivrée par le capteur concerné 32, 33, 34 ou 35, et aussi par l'intermédiaire de l'un des correcteurs 47, 49, 51 ou 53. L'on obtient ainsi une vitesse appropriée et l'arrêt du bras-support à la position désirée.

Comme il va de soi, l'invention ne se limite pas à la seule forme d'exécution de ce dispositif d'asservissement électro-hydraulique de bras-support articulé pour glissière d'appareil de foration qui a été décrite cidessus, à titre d'exemple ; elle en embrasse, au contraire, toutes les variantes de réalisation et d'application fondées sur les mêmes principes.

## Revendications

1. Dispositif d'asservissement électro-hydraulique de bras-support (1) articulé pour glissière (2) d'appareil de foration comprenant : un pivot de base (5) monté tournant autour d'un axe (OZ) sensiblement vertical, un premier moyen moteur hydraulique (7) apte à commander la rotation du pivot de base (5) autour de l'axe précité (OZ), un bras (10, 15) articulé au pivot de base (5) autour d'un axe (W) sensiblement horizontal, un deuxième moyen moteur hydraulique (12) apte à commander le pivotement du bras (10, 15) autour de son axe d'articulation(W) au pivot de base (5), un bloc-support intermédiaire (24) situé à l'extrémité libre du bras (10, 15) et monté tournant autour de l'axe longitudinal dudit bras, un troisième moyen moteur hydraulique (17) apte à commander la rotation dudit bloc-support (24), un berceau (25) supportant la glissière (2) et articulé sur le bloc-support précité (24) autour d'un axe orthogonal à l'axe longitudinal du bras (10, 15), un quatrième moyen moteur hydraulique (27) apte à commander le mouvement du berceau (25) autour de son axe d'articulation, et des moyens électroniques de calcul qui, à partir de deux paramètres de position (α1, α2) repérés par des capteurs (32, 33) et résultant des mouvements commandés par les deux premiers moyens moteurs hydrauliques (7, 12), déterminent en continu les deux autres paramètres de position (α3, α4) repérés par des capteurs (34, 35) et correspondant aux mouvements commandés par les deux derniers moyens moteurs hydrauliques (17, 27), de manière à ce que la glissière (2) reste parallèle à elle-même, caractérisé en ce qu'un calculateur électronique (46), relié à un sélecteur de plans de tir (59), et enregistrant les signaux électriques (V1, V2, V3', V3", V4) issus des capteurs (32, 33, 34, 35) repérant les paramètres de position (α1, α2, α3, α4) correspondant aux différents mouvements du bras-support (1), non seulement détermine les derniers paramètres (α3, α4) en fonction des premiers (α1, α2), mais encore contrôle les déplacements et arrêts du bras-support (1) amenant successivement la glissière (2) dans un certain nombre de positions suivant le plan de tir sélectionné au moyen du sélecteur (59), ledit calculateur (46) délivrant, pour les différents mouvements du bras-support (1), des signaux de commande électriques (Ve1, Ve2, Ve3, Ve4) transitant par des circuits de commande respectifs sur lesquels sont intercalés des correcteurs électroniques d'asservissement (47, 49, 51, 53)—analogiques ou numériques — permettant de tenir compte des efforts ou charges auxquels est soumis le bras-support (1), selon leurs positions, les différents circuits de commande aboutissant à des organes électro-hydrauliques (36, 37, 38, 39), notamment du type « servo-distributeur », montés directement sur les moyens moteurs hydrauliques, vérins (7, 12, 27) ou moteur rotatif (17), les correcteurs électroniques d'asservissement (47, 49, 53) recevant également les signaux (V1, V2, V4) issus des capteurs (32, 33, 34, 35) dont l'un (34) délivre, pour repérer le paramètre angulaire (α3) correspondant au mouvement de rotation sur 360° autour de l'axe longitudinal du bras (10, 15), des signaux électriques (V3', V3") proportionnels au sinus et au cosinus de l'angle de rotation, ces signaux étant amenés à des entrées du calculateur électronique (46) qui restitue un signal (V3) variant linéairement en fonction de l'angle de rotation (α3), ce dernier signal (V3) étant amené au correcteur électronique d'asservissement (51) intercalé sur le circuit de commande du moteur de rotation (17).

2. Dispositif d'asservissement électro-hydraulique selon la revendication 1, caractérisé en ce qu'il est prévu un commutateur électrique « manuel/automatique » (54), relié directement à une entrée du calculateur électronique (46), et un ensemble de manipulateurs électriques « tout ou rien » (55, 56, 57, 58) de commande manuelle indépendante des différents mouvements du bras-support (1), également reliés directement à des entrées du calcultateur électronique (46).

## Claims

1. An elctro-hydraulic automatic control device for an articulated arm support (1) for the slideway (2) of a drilling apparatus comprising a base pivot (5) mounted to rotate about a substantially vertical axis (OZ), a first hydraulic drive means (7) designed to control the rotation of the base pivot (5) about that said axis (OZ), an arm (10, 15) articulated on the base pivot (5) about a substantially horizontal axis (W), a second hydraulic drive means (12) designed to control the pivoting of the arm (10, 15) about its axis of articulation (W) on the base pivot (5), an intermediate support block (24) disposed at the free end of the arm (10, 15) and mounted to rotate about the longitudinal axis of the arm, a third hydraulic drive means (17) designed to control the rotation of the support block (24), a cradle (25) supporting the slideway (2) and articulated on the support block (24) about an axis perpendicular to the longitudinal axis of the arm (10, 15), a fourth hydraulic drive means (27) designed to control the movement of the cradle (25) about its axis of articulation, and electronic computer means which continuously determine, from two positional parameters (α1, α2) detected by sensors (32, 33) and resulting from the movements controlled by the first two hydraulic drive means (7, 12), the two other positional parameters (α3, α4) detected by sensors (34, 35) and corresponding to the movements controlled by the latter two hydraulic drive means (17, 27) such that the slideway (2) remains parallel to itself, characterised in that an electronic computer (46) connected to a firing plan selector (59) and recording the electrical signals (V1, V2, V3', V3", V4) supplied by the sensors (32, 33, 34, 35) detecting the positional parameters (α1, α2, α3, α4) corresponding to the various movements of the arm support (1) not only determines the latter parameters (α3, α4) as a function of the first parameters (α1, α2) but also controls the displacements and stoppages of the arm support (1) bringing the slideway (2) successively into a certain number of positions in accordance with the firing plan selected by means of the selector (59), the computer (46) supplying, for the various movements of the arm support (1), electrical control signals (Ve1, Ve2, Ve3, Ve4) passing through respective control circuits to which there are connected analog or digital electronic automatic control correction devices (47, 49, 51, 53) enabling account to be taken of the efforts or loads to which the arm support (1) is subjected in accordance with their positions, the various control circuits leading to electro-hydraulic members (36, 37, 38, 39), in particular of the "servo-distributor" type, mounted directly on the hydraulic drive means, jacks (7, 12, 27) or a rotary motor (17), the electronic automatic control correction devices (47, 49, 53) also receiving the signals (V1, V2, V4) supplied by the sensors (32, 33, 34, 35), one of which (34) supplies, in order to detect the angular parameter ($\alpha 3$) corresponding to the rotary movement through 360° about the longitudinal axis of the arm (10, 15), electrical signals (V3", V3") proportional to the sine and cosine of the angle of rotation, these signals being supplied to inputs of the electronic computer (46) which returns a signal (V3) varying in a linear manner as a function of the angle of rotation ($\alpha 3$), this latter signal (V3) being supplied to the electronic automatic control. correction device (51) connected into the control circuit for the rotary motor (17).

2. An electro-hydraulic automatic control device as claimed in Claim 1, characterised in that there is provided a "manual/automatic" electrical switch (54) connected directly to an input of the electronic computer (46), and an assembly of electrical "all-or-none" control switches (55, 56, 57, 58) for the independent manual control of the various movements of the arm support (1) also connected directly to inputs of the electronic computer (46).

**Patentansprüche**

1. Elektrohydraulische Steuerung eines gelenkig gelagerten Haltearms (1) für die Schiene (2) eines Bohrgerätes, die enthält: eine um eine genau vertikale Achse (OZ) drehbar befestigte Basisdrehsäule (5), ein erstes hydraulisches Antriebsmittel (7) zum Steuern der Drehung der Basisdrehsäule (5) um die vorgenannte Achse (OZ), einen an der Basisdrehsäule (5) um eine genau horizontale Achse (W) schwenkbar befestigten Arm (10, 15), ein zweites hydraulisches Antriebsmittel (12) zum Steuern der Schwenkbewegung des Arms (10, 15) um seine Schwenkachse (W) an der Basisdrehsäule (5), einen Zwischenhalteblock (24), der am freien Ende des Arms (10, 15) angeordnet und um die Längsachse des Arms drehbar befestigt ist, ein drittes hydraulisches Antriebsmittel (17) zum Steuern der Rotation des Halteblocks (24), eine die Schiene (2) tragende und am vorgenannten Halteblock (24) um eine rechtwinkelig zur Längsachse des Arms (10, 15) stehende Achse angelenkte Wippe (25), ein viertes hydraulisches Antriebsmittel (27) zum Steuern der Wippenbewegung um ihre Anlenkachse, und elektronische Rechnermittel, die ausgehend von zwei Positionsparametern ($\alpha_1$, $\alpha_2$), die durch Meßeinrichtungen (32, 33) bestimmt werden und aus Bewegungen resultieren, die durch die beiden ersten hydraulischen Antriebsmittel (7, 12) gesteuert werden, andauernd die beiden anderen Positionsparameter ($\alpha_3$, $\alpha_4$) ermitteln, die durch Meßeinrichtungen (34, 35) bestimmt werden und den Bewegungen entsprechen, die durch die beiden letzteren hydraulischen Antriebsmittel (17, 27) gesteuert werden, derart, daß die Schiene (2) parallel zu sich selbst bleibt, dadurch gekennzeichnet, daß ein elektronischer Rechner (46), der mit einem Schußplanselektro (59) verbunden ist und die elektrischen Signale (V$_1$, V$_2$, V$_3$', V$_3$", V$_4$) registriert, die von den die den verschiedenen Bewegungen des Haltearms (1) entsprechenden Positionsparameter ($\alpha_1$, $\alpha_2$, $\alpha_3$, $\alpha_4$) bestimmenden Meßeinrichtungen (32, 33, 34, 35) abgegeben werden, nicht nur die letzteren Parameter ($\alpha_3$, $\alpha_4$) in Abhängigkeit von den ersteren ($\alpha_1$, $\alpha_2$) ermittelt, sondern außerdem die Verschiebungen und das Anhalten des Haltearms (1) kontrolliert, wodurch die Schiene (2) aufeinanderfolgend in eine bestimmte Anzahl von Positionen gemäß dem mittels des Selektors (59) ausgewählten Schußplan gebracht wird, wobei der Rechner (46) für die verschiedenen Bewegungen des Haltearms (1) elektrische Steuersignale (Ve$_1$, Ve$_2$, Ve$_3$, Ve$_4$) abgibt, die durch jeweils zugeordnete Steuerkreise gehen, in denen analoge oder numerische elektronische Steuerungskorrektureinrichtungen (47, 49, 51, 53) zwischengeschaltet sind, die die Kräfte oder Belastungen, denen der Haltearm (1) unterworfen ist, den Positionen gemäß berücksichtigen, wobei die verschiedenen Steuerkreise an elektrohydraulische Organe (36, 37, 38, 39) insbesondere vom Typ "Servoverteiler" angeschlossen sind, die direkt an den hydraulischen Antriebsmitteln, Zylinder (7, 12, 27) oder Rotationsmotor (17), befestigt sind, und wobei die elektronischen Steuerungskorrektureinrichtungen (47, 49, 53) ebenfalls die Signale (V$_1$, V$_2$, V$_4$) empfangen, die von den Meßeinrichtungen (32, 33, 34, 35) abgegeben werden, von denen eine (34) zum Bestimmen des der Rotationsbewegung um 360° um die Längsachse des Arms (10, 15) entsprechenden Winkelparameters ($\alpha_3$) zum Sinus und zum Kosinus des Rotationswinkels proportionale elektrische Signale abgibt, die Eingängen des elektronischen Rechners (46) zugeführt werden, der ein in Abhängigkeit des Rotationswinkels ($\alpha_3$) sich linear veränderndes Signal (V$_3$) herstellt, das der elektronischen Steuerungskorrektureinrichtung (51) zugeführt wird, die in den Steuerkreis des Rotationsmotors (17) zwischengeschaltet ist.

2. Elektrohydraulische Steuering nach Anspruch 1, dadurch gekennzeichnet, daß ein elektrischer "Manuell/Automatik"-Schalter (54), der direkt mit einem Eingang des elektronischen Rechners (46) verbunden ist, unde eine Anordnung von elektrischen "Ein/Aus"-Tastern (55, 56, 57, 58) zur unabhängigen manuellen Steuerung der verschiedenen Bewegungen des Haltearms (1), die gleichfalls direkt mit Eingängen des elektronischen Rechners (46) verbunden sind, vorgesehen ist.

FIG.1

0 083 899

0 083 899

FIG. 2

## FİG. 3